# EUROPEAN PATENT APPLICATION

(11) **EP 4 664 811 A1**
(43) Date of publication of application: **17.12.2025**
(21) Application number: 24752844.1
(22) Date of filing: 05.02.2024
(51) Int. Cl.: H04L 5/00

(54) **METHOD AND DEVICE USED IN NODE FOR WIRELESS COMMUNICATION**

(30) Priority: 10.02.2023 CN 202310108201; 02.03.2023 CN 202310197287
(71) Applicant: Apogee Networks, LLC, Dallas, TX 75201 (US)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2024/075945
(87) International publication number: WO 2024/164989

(57) **Abstract**

Disclosed in the present application are a method and device used in a node for wireless communication. A first receiver receives a first PDCCH and a second PDCCH; and a first transmitter sends a first PUSCH and a second PUSCH, the first PDCCH and the second PDCCH respectively scheduling the first PUSCH and the second PUSCH, wherein the first PDCCH ends at a first symbol, and the second PUSCH starts earlier than the end of the first PUSCH; and whether the second PDCCH can end later than the first symbol is related to whether the second PUSCH overlaps with the first PUSCH.

## Description

### Technical Field

The present application relates to a transmission method and device in a wireless communication system, in particular to a transmission method and device for wireless signals in a wireless communication system supporting a cellular network.

### Background Art

For an uplink, enhancing scenarios where a plurality of DCI schedule a plurality of PUSCHs is an effective means to improve transmission efficiency.

### Summary of the Invention

In scenarios where a plurality of DCI schedule a plurality of PUSCHs, how to improve the scheduling flexibility is an important issue that needs to be considered. In view of the above issue, the present application discloses a solution. The present application can be applied to various wireless communication scenarios, such as single-TRP (Transmit/Receive Point) transmission, multi-TRP transmission, single-panel transmission, and multi-panel transmission, and achieves similar technical effects. In addition, the use of a unified solution for different scenarios (including but not limited to the single-TRP transmission, the multi-TRP transmission, the single-panel transmission, and the multi-panel transmission) also facilitates the reduction of hardware complexity and costs or the improvement of performances. In the absence of conflicts, the embodiments and features in the embodiments in any node of the present application can be applied to any other nodes. In the absence of conflicts, the embodiments and the features in the embodiments of the present application can be arbitrarily combined with each other.

As one embodiment, the interpretation of the terminology in the present application is with reference to the definition of the 3GPP standard protocol TS36 series.

As one embodiment, the interpretation of the terminology in the present application is made with reference to the definition of the 3GPP standard protocol TS38 series.

As one embodiment, the interpretation of the terminology in the present application is made with reference to the definition of the 3GPP standard protocol TS37 series.

As one embodiment, the interpretation of the terminology in the present application is with reference to the definition of the IEEE (Institute of Electrical and Electronics Engineers) standard protocol.

The present application discloses a method used in a first node for wireless communication, characterized by comprising:
receiving a first PDCCH and a second PDCCH; and
sending a first PUSCH and a second PUSCH, the first PDCCH and the second PDCCH respectively scheduling the first PUSCH and the second PUSCH,
wherein the first PDCCH ends at a first symbol, and the second PUSCH starts earlier than the end of the first PUSCH; and whether the second PDCCH can end later than the first symbol is related to whether the second PUSCH overlaps with the first PUSCH.

As one embodiment, the benefits of the above method comprise: improving the scheduling flexibility.

As one embodiment, the benefits of the above method comprise: helping to support simultaneous sending of a plurality of PUSCHs on one scheduled cell.

As one embodiment, the benefits of the above method comprise: improving the uplink transmission performance.

As one embodiment, the benefits of the above method comprise: enabling a communication system to support more communication scenarios.

As one embodiment, the benefits of the above method comprise: optimizing a system design to support different user equipment.

As one embodiment, the benefits of the above method comprise: having good compatibility.

As one embodiment, the benefits of the above method comprise: small changes to the existing 3GPP standard and small workloads required for standardization.

According to one aspect of the present application, the above method is characterized in that:
when the second PUSCH overlaps with the first PUSCH, the second PDCCH can end later than the first symbol.

As one embodiment, the benefits of the above method comprise: improving the scheduling flexibility.

As one embodiment, the benefits of the above method comprise: helping to support different user equipment and having good compatibility.

As one embodiment, the benefits of the above method comprise: helping to reduce the transmission delay.

According to one aspect of the present application, the above method is characterized in that:
when the second PUSCH does not overlap with the first PUSCH: when the second PDCCH and the first PDCCH are associated with different coresetPoolIndex values, the second PDCCH can end later than the first symbol.

As one embodiment, the benefits of the above method comprise: improving the scheduling flexibility.

As one embodiment, the benefits of the above method comprise: helping to support different user equipment and having good compatibility.

As one embodiment, the benefits of the above method comprise: helping to reduce the transmission delay.

According to one aspect of the present application, the above method is characterized in that:
when the second PUSCH does not overlap with the first PUSCH, whether the second PDCCH can end later than the first symbol is related to whether the first PDCCH and the second PDCCH are associated with different coresetPoolIndex values.

As one embodiment, the benefits of the above method comprise: improving the scheduling flexibility.

As one embodiment, the benefits of the above method comprise: helping to support different user equipment and having good compatibility.

According to one aspect of the present application, the above method is characterized in that:
when the second PUSCH does not overlap with the first PUSCH: when the second PDCCH and the first PDCCH are not associated with different coresetPoolIndex values, the second PDCCH cannot end later than the first symbol.

As one embodiment, the benefits of the above method comprise: helping to support different user equipment and having good compatibility.

According to one aspect of the present application, the above method is characterized in that:
the first PDCCH and the second PDCCH are on the same BWP, and the first PUSCH and the second PUSCH are on the same scheduled cell.

According to one aspect of the present application, the above method is characterized in that:
ackNackFeedbackMode is configured as separate.

As one embodiment, the benefits of the above method comprise: improving the scheduling flexibility.

The present application discloses a method used in a second node for wireless communication, characterized by comprising:
sending a first PDCCH and a second PDCCH; and
receiving a first PUSCH and a second PUSCH, the first PDCCH and the second PDCCH respectively scheduling the first PUSCH and the second PUSCH,
wherein the first PDCCH ends at a first symbol, and the second PUSCH starts earlier than the end of the first PUSCH; and whether the second PDCCH can end later than the first symbol is related to whether the second PUSCH overlaps with the first PUSCH.

According to one aspect of the present application, the above method is characterized in that:
when the second PUSCH overlaps with the first PUSCH, the second PDCCH can end later than the first symbol.

According to one aspect of the present application, the above method is characterized in that:
when the second PUSCH does not overlap with the first PUSCH: when the second PDCCH and the first PDCCH are associated with different coresetPoollndex values, the second PDCCH can end later than the first symbol.

According to one aspect of the present application, the above method is characterized in that:
when the second PUSCH does not overlap with the first PUSCH, whether the second PDCCH can end later than the first symbol is related to whether the first PDCCH and the second PDCCH are associated with different coresetPoollndex values.

According to one aspect of the present application, the above method is characterized in that:
when the second PUSCH does not overlap with the first PUSCH: when the second PDCCH and the first PDCCH are not associated with different coresetPoolIndex values, the second PDCCH cannot end later than the first symbol.

According to one aspect of the present application, the above method is characterized in that:
the first PDCCH and the second PDCCH are on the same BWP, and the first PUSCH and the second PUSCH are on the same scheduled cell.

According to one aspect of the present application, the above method is characterized in that:
ackNackFeedbackMode is configured as separate.

The present application discloses a first node for wireless communication, characterized by comprising:
a first receiver for receiving a first PDCCH and a second PDCCH; and
a first transmitter for sending a first PUSCH and a second PUSCH, the first PDCCH and the second PDCCH respectively scheduling the first PUSCH and the second PUSCH,
wherein the first PDCCH ends at a first symbol, and the second PUSCH starts earlier than the end of the first PUSCH; and whether the second PDCCH can end later than the first symbol is related to whether the second PUSCH overlaps with the first PUSCH.

The present application discloses a second node for wireless communication, characterized by comprising:
a second transmitter for sending a first PDCCH and a second PDCCH; and
a second receiver for receiving a first PUSCH and a second PUSCH, the first PDCCH and the second PDCCH respectively scheduling the first PUSCH and the second PUSCH,
wherein the first PDCCH ends at a first symbol, and the second PUSCH starts earlier than the end of the first PUSCH; and whether the second PDCCH can end later than the first symbol is related to whether the second PUSCH overlaps with the first PUSCH.

### Brief Description of the Drawings

By reading the detailed description of the non-limiting embodiments with reference to the following drawings, other features, purposes and advantages of the present application will become more obvious.
FIG. 1 shows a processing flowchart of a first node according to one embodiment of the present application;
FIG. 2 shows a schematic diagram of a network architecture according to one embodiment of the present application;
FIG. 3 shows a schematic diagram of a radio protocol architecture for a user plane and a control plane according to one embodiment of the present application;
FIG. 4 shows a schematic diagram of a first communication device and a second communication device according to one embodiment of the present application;
FIG. 5 shows a flowchart of signal transmission according to one embodiment of the present application;
FIG. 6 shows a schematic diagram explaining whether a second PDCCH can end later than a first symbol according to one embodiment of the present application;
FIG. 7 shows a schematic diagram explaining whether a second PDCCH can end later than a first symbol according to one embodiment of the present application;
FIG. 8 shows a structural block diagram of a processing device in a first node device according to one embodiment of the present application; and
FIG. 9 shows a structural block diagram of a processing device in a second node device according to one embodiment of the present application.

### Detailed Description of Embodiments

The technical solution of the present application will be further described in detail below with reference to the accompanying drawings. It should be noted that in the absence of conflicts, the embodiments and features in the embodiments of the present application can be arbitrarily combined with each other.

### Embodiment 1

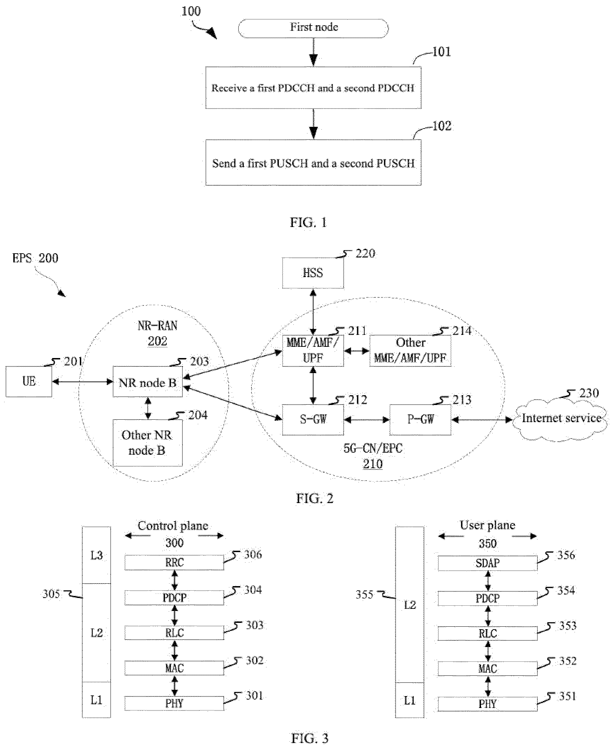

Embodiment 1 illustrates a processing flowchart of a first node according to one embodiment of the present application, as shown in FIG. 1.

In Embodiment 1, the first node in the present application receives a first PDCCH and a second PDCCH in step 101; and sends a first PUSCH and a second PUSCH in step 102.

In Embodiment 1, the first PDCCH and the second PDCCH respectively schedule the first PUSCH and the second PUSCH; the first PDCCH ends at a first symbol, and the second PUSCH starts earlier than the end of the first PUSCH; and whether the second PDCCH can end later than the first symbol is related to whether the second PUSCH overlaps with the first PUSCH.

As one embodiment, the meaning of receiving one PDCCH (Physical Downlink Control Channel) comprises: performing monitoring in this PDCCH.

As one embodiment, the meaning of receiving one PDCCH comprises: detecting a DCI format in this PDCCH.

As one embodiment, the meaning of receiving one PDCCH comprises: receiving one piece of DCI (Downlink Control Information) in this PDCCH.

As one embodiment, the meaning of receiving one PDCCH is: receiving one piece of DCI in this PDCCH.

As one embodiment, the meaning of receiving one PDCCH is: receiving one DCI format in this PDCCH.

As one embodiment, the meaning of sending one PUSCH (Physical Uplink Shared Channel) is: sending at least one of a transport block or a CSI (Channel State Information) report on this PUSCH.

As one embodiment, the meaning of sending one PUSCH comprises: sending at least one of a transport block or a CSI report on this PUSCH.

As one embodiment, the meaning of sending one PUSCH comprises: sending a signal on this PUSCH, the sent signal comprising one bit block undergoing at least channel coding, scrambling, modulation, layer mapping, precoding, mapping to a virtual resource block, and outputting after mapping from the virtual resource block to a physical resource block.

As one embodiment, the meaning of sending one PUSCH comprises: sending uplink information, this PUSCH being used for carrying the uplink information.

As one embodiment, the meaning of one PDCCH scheduling one PUSCH is: the DCI received in this PDCCH schedules this PUSCH.

As one embodiment, the meaning of one PDCCH scheduling one PUSCH comprises: the DCI received in this PDCCH schedules this PUSCH.

As one embodiment, the meaning of one PDCCH scheduling one PUSCH comprises: this PDCCH carries scheduling information of this PUSCH.

As one embodiment, the meaning of one PDCCH scheduling one PUSCH comprises: the sending of this PUSCH depends on the reception of this PDCCH.

As one embodiment, the first PDCCH ends at a first symbol in a time domain.

As one embodiment, the first symbol is the latest symbol occupied by the first PDCCH in a time domain.

As one embodiment, the first symbol is a symbol i.

As one embodiment, the first symbol is one OFDM (Orthogonal Frequency Division Multiplex) symbol.

As one embodiment, the first symbol is one time-domain symbol.

As one embodiment, the first symbol is a symbol of a scheduling cell.

As one embodiment, from the perspective of the time domain, the second PUSCH starts earlier than the end of the first PUSCH.

As one embodiment, from the perspective of the time domain, a starting moment of the second PUSCH is earlier than a cut-off moment of the first PUSCH.

As one embodiment, from the perspective of the time domain, the earliest symbol occupied by the second PUSCH is earlier than the latest symbol occupied by the first PUSCH.

As one embodiment, from the perspective of the time domain, the earliest symbol occupied by the second PUSCH is not later than the latest symbol occupied by the first PUSCH.

As one embodiment, in the present application, the meaning that the second PUSCH overlaps/does not overlap with the first PUSCH is: the second PUSCH overlaps/does not overlap with the first PUSCH in a time domain.

As one embodiment, the statement that whether the second PDCCH can end later than the first symbol is related to whether the second PUSCH overlaps with the first PUSCH and whether the second PDCCH ends later than the first symbol is related to whether the second PUSCH overlaps with the first PUSCH are equivalent or can be replaced with each other.

As one embodiment, the meaning of the statement that whether the second PDCCH can end later than the first symbol is related to whether the second PUSCH overlaps with the first PUSCH is:
a time-domain relationship between the end of the second PDCCH and the first symbol is related to whether the second PUSCH overlaps with the first PUSCH; when the second PUSCH overlaps with the first PUSCH, the second PDCCH can end later than the first symbol; and when the second PUSCH does not overlap with the first PUSCH, whether the second PDCCH can end later than the first symbol is related to whether the first PDCCH and the second PDCCH are associated with different coresetPoolIndex values.

As one embodiment, the meaning of the statement that whether the second PDCCH can end later than the first symbol is related to whether the second PUSCH overlaps with the first PUSCH is: whether it is allowed or not expected for the second PDCCH to end later than the first symbol is related to whether the second PUSCH overlaps with the first PUSCH.

As one embodiment, when the second PUSCH overlaps with the first PUSCH in a time domain, the second PDCCH can end later than the first symbol.

As one embodiment, when the second PUSCH does not overlap with the first PUSCH in a time domain: when the second PDCCH and the first PDCCH are associated with different coresetPoolIndex values, the second PDCCH can end later than the first symbol.

As one embodiment, when the second PUSCH does not overlap with the first PUSCH in a time domain, whether the second PDCCH can end later than the first symbol is related to whether the first PDCCH and the second PDCCH are associated with different coresetPoolIndex values.

As one embodiment, when the second PUSCH does not overlap with the first PUSCH in a time domain: when the second PDCCH and the first PDCCH are not associated with different coresetPoolIndex values, the second PDCCH cannot end later than the first symbol.

As one embodiment, the meaning of the statement that whether the second PDCCH can end later than the first symbol is related to whether the second PUSCH overlaps with the first PUSCH is:
a time-domain relationship between the end of the second PDCCH and the first symbol is related to whether the second PUSCH overlaps with the first PUSCH in a time domain; when the second PUSCH overlaps with the first PUSCH in the time domain, the second PDCCH can end later than the first symbol; and when the second PUSCH does not overlap with the first PUSCH in the time domain, whether the second PDCCH can end later than the first symbol is related to whether the first PDCCH and the second PDCCH are associated with different coresetPoolIndex values.

As one embodiment, ackNackFeedbackMode is configured as joint.

As one embodiment, ackNackFeedbackMode is not configured.

As one embodiment, the ackNackFeedbackMode is a higher layer parameter.

As one embodiment, the ackNackFeedbackMode is an RRC layer parameter.

As one embodiment, the first node receives a first parameter; and based on the configuration of the first parameter, it is allowed that 2 PUSCHs on the same serving cell are sent simultaneously.

As one embodiment, the first node receives a first parameter; and based on the configuration of the first parameter, it is allowed that 2 PUSCHs of at least one same RE (Resource Element) occupied on the same serving cell are both sent.

As one embodiment, the first parameter is a parameter for the same serving cell.

As one embodiment, the first parameter is an RRC layer parameter.

As one embodiment, the first parameter is one parameter in one information element (IE).

As one embodiment, the name of the first parameter comprises STxMP.

As one embodiment, the name of the first parameter comprises multi-DCI.

As one embodiment, µ = 5 or 6, and µ is a subcarrier spacing configuration.

As one embodiment, µ is less than 5, and the µ is a subcarrier spacing configuration.

As one embodiment, the first node is configured with a higher layer parameter PDCCH-Config for an active BWP (Bandwidth Part) of one serving cell, and the higher layer parameter PDCCH-Config comprises 2 different coresetPoolIndex values in ControlResourceSet.

As one embodiment, the first node is configured or not configured with a higher layer parameter PDCCH-Config for an active BWP of one serving cell, and the higher layer parameter PDCCH-Config comprises 2 different coresetPoolIndex values in ControlResourceSet.

As one embodiment, the first PDCCH and the second PDCCH are on the same BWP.

As one embodiment, the first PUSCH and the second PUSCH are on the same scheduled cell.

As one embodiment, the first PUSCH starts at a symbol *j*.

As one embodiment, the first PUSCH is for one HARQ process ID in any two HARQ (Hybrid Automatic Repeat Request) process IDs, and the second PUSCH is for another HARQ process ID in the any two HARQ process IDs.

As one embodiment, both of the first PUSCH and the second PUSCH are for two HARQ process IDs, respectively.

As one embodiment, both of the first PUSCH and the second PUSCH are in one-to-one correspondence with two HARQ process IDs.

### Embodiment 2

Embodiment 2 illustrates a schematic diagram of one network architecture according to the present application, as shown in FIG. 2.

FIG. 2 explains a diagram of a network architecture 200 of 5G NR, LTE (Long-Term Evolution), and LTE-A (Long-Term Evolution Advanced) systems. The 5G NR or LTE network architecture 200 may be referred to as an EPS (Evolved Packet System) 200 or some other suitable terminologies. The EPS 200 may comprise one or more pieces of UE (User Equipment) 201, an NG-RAN (Next Generation-Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet switching services, but those skilled in the art will readily appreciate that the various concepts presented throughout the present application may be extended to networks providing circuit switching services or other cellular networks. The NG-RAN comprises an NR Node B (gNB) 203 and other gNB204. The gNB203 provides user and control plane protocol terminations toward the UE201. The gNB203 may be connected to the other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (Transmit Receive Point), or some other suitable terminologies. The gNB203 provides an access point to the EPC/5G-CN 210 for the UE201. Examples of the UE201 comprise cellular phones, smart phones, session initiation protocol (SIP) phones, laptops, personal digital assistants (PDAs), satellite radio, non-terrestrial base station communications, satellite mobile communications, global positioning systems, multimedia devices, video devices, digital audio players (e.g., MP3 players), cameras, game consoles, drones, aircrafts, narrowband Internet of Things devices, machine type communication devices, land vehicles, automobiles, wearable devices, or any other similar functional devices. Those skilled in the art may also refer to the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 via an Sl/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes a signaling between the UE201 and the EPC/5G-CN 210. Generally, the MME/AMF/UPF211 provides bearer and connection management. All user IP (Internet Protocol) packets are transmitted by the S-GW212, and the S-GW212 is itself connected to the P-GW213. The P-GW213 provides UE IP address allocation and other functions. The P-GW213 is connected to the Internet Service 230. The Internet Service 230 comprises operator-corresponding Internet protocol services, which may specifically comprise the Internet, an intranet, an IMS (IP Multimedia Subsystem), and a packet switching streaming service.

As one embodiment, the UE201 corresponds to the first node in the present application.

As one embodiment, the UE201 corresponds to the second node in the present application.

As one embodiment, the UE201 is UE.

As one embodiment, the gNB203 corresponds to the first node in the present application.

As one embodiment, the gNB203 corresponds to the second node in the present application.

As one embodiment, the UE201 corresponds to the first node in the present application, and the gNB203 corresponds to the second node in the present application.

As one embodiment, the gNB203 is a MacroCellular base station.

As one embodiment, the gNB203 is a Micro Cell base station.

As one embodiment, the gNB203 is a PicoCell base station.

As one embodiment, the gNB203 is a Femtocell.

As one embodiment, the gNB203 is base station equipment supporting a large-latency difference.

As one embodiment, the gNB203 is one piece of flying platform equipment.

As one embodiment, the gNB203 is satellite equipment.

As one embodiment, the gNB203 is a base station enabling network energy saving enhancement.

### Embodiment 3

Embodiment 3 shows a schematic diagram of one embodiment of a radio protocol architecture for one user plane and one control plane according to the present application, as shown in FIG. 3. FIG. 3 is a schematic diagram illustrating an embodiment of a radio protocol architecture for a user plane 350 and a control plane 300. FIG. 3 shows a radio protocol architecture for a control plane 300 used between a first communication node device (UE, gNB, or RSU in V2X) and a second communication node device (gNB, UE, or RSU in V2X), or between two pieces of UE using three layers: Layer 1, Layer 2, and Layer 3. The Layer 1 (L1 layer) is the lowest layer and implements various PHY (Physical Layer) signal processing functions. The L1 layer will be referred to herein as PHY301. The Layer 2 (L2 layer) 305 is above the PHY301, and is responsible for links between the first communication node device and the second communication node device and between the two pieces of UE by the PHY301. The L2 layer 305 comprises an MAC (Medium Access Control) sublayer 302, an RLC (Radio Link Control) sublayer 303, and a PDCP (Packet Data Convergence Protocol) sublayer 304, and these sublayers terminate at the second communication node device. The PDCP sublayer 304 provides multiplexing between different radio bearers and logical channels. The PDCP sublayer 304 also provides security by encrypting data packets, and provides handover support for the first communication node device between the second communication node device. The RLC sublayer 303 provides segmentation and reassembly of upper layer data packets, retransmission of lost data packets, and reordering of data packets to compensate for the out-of-order reception due to HARQ. The MAC sublayer 302 provides multiplexing between logical and transport channels. The MAC sublayer 302 is also responsible for allocating various radio resources (e.g., resource blocks) in one cell between the first communication node device. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring a lower layer using an RRC signaling between the second communication node device and the first communication node device. The radio protocol architecture for the user plane 350 comprises a Layer 1 (L1 layer) and a Layer 2 (L2 layer). The radio protocol architecture for the first communication node device and the second communication node device in the user plane 350 is substantially the same as that for the corresponding layers and sublayers in the control plane 300 for a physical layer 351, a PDCP sublayer 354 in the L2 layer 355, an RLC sublayer 353 in the L2 layer 355, and an MAC sublayer 352 in the L2 layer 355, but the PDCP sublayer 354 also provides header compression for upper layer data packets to reduce radio transmission overhead. The L2 layer 355 in the user plane 350 further comprises an SDAP (Service Data Adaptation Protocol) sublayer 356, and the SDAP sublayer 356 is responsible for mapping between QoS streams and data radio bearers (DRBs) to support the diversity of services. Although not shown in figures, the first communication node device may have several upper layers above the L2 layer 355, comprising a network layer (e.g., an IP layer) terminating at the P-GW on a network side and an application layer terminating at the other end (e.g., remote UE, a server, etc.) of a connection.

As one embodiment, the radio protocol architecture in FIG. 3 is applicable to the first node in the present application.

As one embodiment, the radio protocol architecture in FIG. 3 is applicable to the second node in the present application.

As one embodiment, the first PDCCH in the present application is generated in the PHY301.

As one embodiment, the second PDCCH in the present application is generated in the PHY301.

As one embodiment, the first PUSCH in the present application is generated in the PHY351.

As one embodiment, the second PUSCH in the present application is generated in the PHY351.

### Embodiment 4

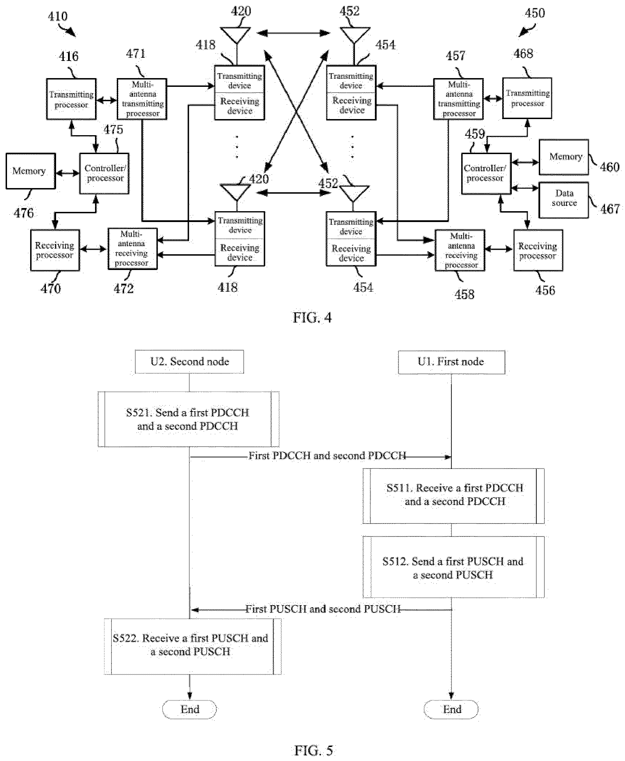

Embodiment 4 shows a schematic diagram of a first communication device and a second communication device according to the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, upper-layer data packets from a core network are provided to the controller/processor 475. The controller/processor 475 implements the functionality of the L2 layer. In the transmission from the first communication device 410 to the second communication device 450, the controller/processor 475 provides header compression, encryption, packet segmentation and reordering, multiplexing between logical and transport channels, and radio resource allocation to the second communication device 450 based on various priority metrics. The controller/processor 475 is also responsible for retransmission of lost packets and signaling to the second communication device 450. The transmitting processor 416 and the multi-antenna transmitting processor 471 implement various signal processing functions for the L1 layer (i.e., the physical layer). The transmitting processor 416 implements coding and interleaving to facilitate forward error correction (FEC) at the second communication device 450, as well as mapping of signal clusters based on various modulation solutions (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding (comprising codebook-based precoding and non-codebook-based precoding) and beamforming processing on the coded and modulated symbols to generate one or more spatial streams. The transmitting processor 416 then maps each spatial stream to a subcarrier, multiplexes with a reference signal (e.g., pilot frequency) in a time domain and/or frequency domain, and subsequently uses an inverse fast Fourier transform (IFFT) to generate a physical channel carrying a time-domain multi-carrier symbol stream. The multi-antenna transmitting processor 471 then performs transmitting analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiving device 454 receives a signal via its corresponding antenna 452. Each receiving device 454 recovers information modulated onto a radio frequency carrier, and converts the radio frequency stream into the baseband multi-carrier symbol stream which is provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, the physical layer data signal and the reference signal are demultiplexed by the receiving processor 456, wherein the reference signal will be used for channel estimation, and any spatial stream with the second communication device 450 as the destination is recovered from the data signal after multi-antenna detection in the multi-antenna receiving processor 458. The symbols on each spatial stream are demodulated and recovered in the receiving processor 456, and soft decisions are generated. The receiving processor 456 then decodes and deinterleaves the soft decisions to recover upper-layer data and control signals transmitted by the first communication device 410 on the physical channel. The upper-layer data and the control signals are then provided to the controller/processor 459. The controller/processor 459 implements the functions of the L2 layer. The controller/processor 459 may be associated with the memory 460 for storing program codes and data. The memory 460 may be referred to as a computer-readable medium. In the transmission from the first communication device 410 to the second communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to the L3 for L3 processing.

In the transmission from the second communication device 450 to the first communication device 410, at the second communication device 450, the data source 467 is used for providing the upper-layer data packets to the controller/processor 459. The data source 467 represents all protocol layers above the L2 layer. Similar to the sending function at the first communication device 410 described in the transmission from the first communication device 410 to the second communication device 450, the controller/processor 459 implements header compression, encryption, packet segmentation and reordering, and multiplexing between logical and transport channels based on radio resource allocation, and implements the functions of the L2 layer for the user plane and the control plane. The controller/processor 459 is also responsible for retransmission of lost packets and signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. The transmitting processor 468 then modulates the generated spatial stream into a multi-carrier/single-carrier symbol stream, which is provided to different antennas 452 via the transmitting device 454 after an analog precoding/beamforming operation in the multi-antenna transmitting processor 457. Each transmitting device 454 first converts a baseband symbol stream provided by the multi-antenna transmitting processor 457 into a radio frequency symbol stream, which is then provided to the antenna 452.

In the transmission from the second communication device 450 to the first communication device 410, the function at the first communication device 410 is similar to the receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 for storing program codes and data. The memory 476 may be referred to as a computer-readable medium. In the transmission from the second communication device 450 to the first communication device 410, the controller/processor 475 provides demultiplexing between transport and logical channels, packet reassembly, decryption, header decompression, and control signal processing to recover the upper-layer data packets from the UE450. The upper-layer data packets from the controller/processor 475 may be provided to the core network.

As one embodiment, the first node in the present application comprises the second communication device 450, and the second node in the present application comprises the first communication device 410.

As one sub-embodiment of the above embodiment, the first node is user equipment, and the second node is user equipment.

As one sub-embodiment of the above embodiment, the first node is user equipment, and the second node is a relay node.

As one sub-embodiment of the above embodiment, the first node is a relay node, and the second node is user equipment.

As one sub-embodiment of the above embodiment, the first node is user equipment, and the second node is base station equipment.

As one sub-embodiment of the above embodiment, the first node is a relay node, and the second node is base station equipment.

As one sub-embodiment of the above embodiment, the second node is user equipment, and the first node is base station equipment.

As one sub-embodiment of the above embodiment, the second node is a relay node, and the first node is base station equipment.

As one sub-embodiment of the above embodiment, the second communication device 450 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for error detection using an acknowledgement (ACK) and/or negative acknowledgement (NACK) protocol to support HARQ operations.

As one embodiment, the second communication device 450 comprises: at least one processor and at least one memory, the at least one memory comprising a computer program code; and the at least one memory and the computer program code being configured to be used together with the at least one processor. The second communication device 450 device at least: receives a first PDCCH and a second PDCCH; and sends a first PUSCH and a second PUSCH, the first PDCCH and the second PDCCH respectively scheduling the first PUSCH and the second PUSCH, wherein the first PDCCH ends at a first symbol, and the second PUSCH starts earlier than the end of the first PUSCH; and whether the second PDCCH can end later than the first symbol is related to whether the second PUSCH overlaps with the first PUSCH.

As one sub-embodiment of the above embodiment, the second communication device 450 corresponds to the first node in the present application.

As one embodiment, the second communication device 450 comprises: a memory storing a computer-readable instruction program, wherein the computer-readable instruction program generates actions when executed by at least one processor, and the actions comprise: receiving a first PDCCH and a second PDCCH; and sending a first PUSCH and a second PUSCH, the first PDCCH and the second PDCCH respectively scheduling the first PUSCH and the second PUSCH, wherein the first PDCCH ends at a first symbol, and the second PUSCH starts earlier than the end of the first PUSCH; and whether the second PDCCH can end later than the first symbol is related to whether the second PUSCH overlaps with the first PUSCH.

As one sub-embodiment of the above embodiment, the second communication device 450 corresponds to the first node in the present application.

As one embodiment, the first communication device 410 comprises: at least one processor and at least one memory, the at least one memory comprising a computer program code; and the at least one memory and the computer program code being configured to be used together with the at least one processor. The first communication device 410 device at least: sends a first PDCCH and a second PDCCH; and receives a first PUSCH and a second PUSCH, the first PDCCH and the second PDCCH respectively scheduling the first PUSCH and the second PUSCH, wherein the first PDCCH ends at a first symbol, and the second PUSCH starts earlier than the end of the first PUSCH; and whether the second PDCCH can end later than the first symbol is related to whether the second PUSCH overlaps with the first PUSCH.

As one sub-embodiment of the above embodiment, the first communication device 410 corresponds to the second node in the present application.

As one embodiment, the first communication device 410 comprises: a memory storing a computer-readable instruction program, wherein the computer-readable instruction program generates actions when executed by at least one processor, and the actions comprise: sending a first PDCCH and a second PDCCH; and receiving a first PUSCH and a second PUSCH, the first PDCCH and the second PDCCH respectively scheduling the first PUSCH and the second PUSCH, wherein the first PDCCH ends at a first symbol, and the second PUSCH starts earlier than the end of the first PUSCH; and whether the second PDCCH can end later than the first symbol is related to whether the second PUSCH overlaps with the first PUSCH.

As one sub-embodiment of the above embodiment, the first communication device 410 corresponds to the second node in the present application.

As one embodiment, at least one of {the antenna 452, the receiving device 454, the multi-antenna receiving processor 458, the receiving processor 456, the controller/processor 459, the memory 460, and the data source 467} is used for receiving the first PDCCH in the present application.

As one embodiment, at least one of {the antenna 420, the transmitting device 418, the multi-antenna transmitting processor 471, the transmitting processor 416, the controller/processor 475, and the memory 476} is used for sending the first PDCCH.

As one embodiment, at least one of {the antenna 452, the receiving device 454, the multi-antenna receiving processor 458, the receiving processor 456, the controller/processor 459, the memory 460, and the data source 467} is used for receiving the second PDCCH in the present application.

As one embodiment, at least one of {the antenna 420, the transmitting device 418, the multi-antenna transmitting processor 471, the transmitting processor 416, the controller/processor 475, and the memory 476} is used for sending the second PDCCH.

As one embodiment, at least one of {the antenna 452, the transmitting device 454, the multi-antenna transmitting processor 458, the transmitting processor 468, the controller/processor 459, the memory 460, and the data source 467} is used for sending the first PUSCH in the present application.

As one embodiment, at least one of {the antenna 420, the receiving device 418, the multi-antenna receiving processor 472, the receiving processor 470, the controller/processor 475, and the memory 476} is used for receiving the first PUSCH in the present application.

As one embodiment, at least one of {the antenna 452, the transmitting device 454, the multi-antenna transmitting processor 458, the transmitting processor 468, the controller/processor 459, the memory 460, and the data source 467} is used for sending the second PUSCH in the present application.

As one embodiment, at least one of {the antenna 420, the receiving device 418, the multi-antenna receiving processor 472, the receiving processor 470, the controller/processor 475, and the memory 476} is used for receiving the second PUSCH in the present application.

### Embodiment 5

Embodiment 5 illustrates a flowchart of signal transmission according to one embodiment of the present application, as shown in FIG. 5. In FIG. 5, a first node U1 communicates with a second node U2 via an air interface.

The first node U1 receives a first PDCCH and a second PDCCH in step S511; and sends a first PUSCH and a second PUSCH in step S512.

The second node U2 sends a first PDCCH and a second PDCCH in step S521; and receives a first PUSCH and a second PUSCH in step S522.

In Embodiment 5, the first PDCCH and the second PDCCH respectively schedule the first PUSCH and the second PUSCH; the first PDCCH and the second PDCCH are on the same BWP, and the first PUSCH and the second PUSCH are on the same scheduled cell; the first PDCCH ends at a first symbol, and the second PUSCH starts earlier than the end of the first PUSCH; whether the second PDCCH can end later than the first symbol is related to whether the second PUSCH overlaps with the first PUSCH; when the second PUSCH overlaps with the first PUSCH, the second PDCCH can end later than the first symbol; when the second PUSCH does not overlap with the first PUSCH: when the second PDCCH and the first PDCCH are associated with different coresetPoolIndex values, the second PDCCH can end later than the first symbol; and when the second PUSCH does not overlap with the first PUSCH: when the second PDCCH and the first PDCCH are not associated with different coresetPoolIndex values, it is not expected that the second PDCCH ends later than the first symbol.

As one sub-embodiment of Embodiment 5, ackNackFeedbackMode is configured as separate.

As one sub-embodiment of Embodiment 5, ackNackFeedbackMode is configured as joint.

As one embodiment, the first node U1 is the first node in the present application.

As one embodiment, the second node U2 is the second node in the present application.

As one embodiment, the first node U1 is one piece of UE.

As one embodiment, the first node U1 is one base station.

As one embodiment, the second node U2 is one base station.

As one embodiment, the second node U2 is one piece of UE.

As one embodiment, an air interface between the second node U2 and the first node U1 is a Uu interface.

As one embodiment, an air interface between the second node U2 and the first node U1 comprises a cellular link.

As one embodiment, an air interface between the second node U2 and the first node U1 comprises a radio interface between base station equipment and user equipment.

As one embodiment, an air interface between the second node U2 and the first node U1 comprises a radio interface between satellite equipment and user equipment.

As one embodiment, an air interface between the second node U2 and the first node U1 comprises a radio interface between user equipment and user equipment.

As one embodiment, the issue to be solved by the present application comprises: how to improve the scheduling flexibility.

As one embodiment, the issue to be solved by the present application comprises: how to improve the uplink transmission performance.

As one embodiment, the issue to be solved by the present application comprises: how to optimize a system design to support more communication scenarios or different user equipment.

As one embodiment, the issue to be solved by the present application comprises: how to ensure the good compatibility.

As one embodiment, the issue to be solved by the present application comprises: clarifying a relationship between a PDCCH and a PUSCH.

As one embodiment, the issue to be solved by the present application comprises: clarifying a relationship between whether the second PDCCH can end later than the first symbol and whether the second PUSCH overlaps with the first PUSCH.

As one embodiment, the issue to be solved by the present application comprises: clarifying a relationship between whether the second PDCCH can end later than the first symbol and both of whether the second PUSCH overlaps with the first PUSCH and whether the first PDCCH and the second PDCCH are associated with different coresetPoolIndex values.

### Embodiment 6

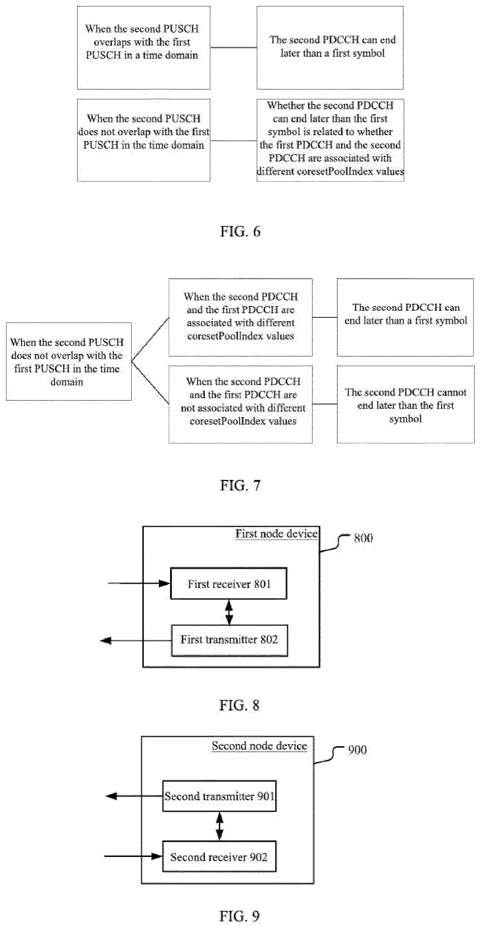

Embodiment 6 illustrates a schematic diagram explaining whether a second PDCCH can end later than a first symbol according to one embodiment of the present application, as shown in FIG. 6.

In Embodiment 6, when the second PUSCH overlaps with the first PUSCH in a time domain, the second PDCCH can end later than the first symbol; and when the second PUSCH does not overlap with the first PUSCH in the time domain, whether the second PDCCH can end later than the first symbol is related to whether the first PDCCH and the second PDCCH are associated with different coresetPoolIndex values.

As one embodiment, when the second PUSCH overlaps with the first PUSCH in a time domain, the second PDCCH and the first PDCCH are associated with different coresetPoolIndex values.

As one embodiment, when the second PUSCH overlaps with the first PUSCH in a time domain, the first node does not expect that the second PDCCH and the first PDCCH are not associated with different coresetPoolIndex values.

As one embodiment, when the second PUSCH overlaps with the first PUSCH in a time domain, it is not allowed that the second PDCCH and the first PDCCH are not associated with different coresetPoolIndex values.

As one embodiment, the statement "the second PDCCH can end later than the first symbol" means: it is allowed that the second PDCCH ends later than the first symbol.

As one embodiment, the second PDCCH ends at a second symbol in a time domain; and the statement "the second PDCCH can end later than the first symbol" means: candidates of the second symbol comprise at least one symbol later than the first symbol.

As one embodiment, the statement "the second PDCCH can end later than the first symbol" means: it is allowed that the second PDCCH ends later or not later than the first symbol.

As one embodiment, the statement "the second PDCCH can end later than the first symbol" means: there is no restriction on an ending position of the second PDCCH by the first symbol in a time domain.

As one embodiment, the statement "whether the second PDCCH can end later than the first symbol is related to whether the first PDCCH and the second PDCCH are associated with different coresetPoolIndex values" means:
when the second PDCCH and the first PDCCH are associated with different coresetPoolIndex values, the second PDCCH can end later than the first symbol; and when the second PDCCH and the first PDCCH are not associated with different coresetPoolIndex values, the second PDCCH cannot end later than the first symbol.

As one embodiment, the statement "whether the second PDCCH can end later than the first symbol is related to whether the first PDCCH and the second PDCCH are associated with different coresetPoolIndex values" means:
when the second PDCCH and the first PDCCH are associated with different coresetPoollndex values, the second PDCCH cannot end later than the first symbol; and when the second PDCCH and the first PDCCH are not associated with different coresetPoolIndex values, the second PDCCH can end later than the first symbol.

As one embodiment, the coresetPoolIndex is a parameter indicating an index of a CORESET (Control Resource Set) pool.

As one embodiment, the coresetPoolIndex is an RRC layer parameter.

### Embodiment 7

Embodiment 7 illustrates a schematic diagram explaining whether a second PDCCH can end later than a first symbol according to one embodiment of the present application, as shown in FIG. 7.

In Embodiment 7, when the second PUSCH does not overlap with the first PUSCH in a time domain: when the second PDCCH and the first PDCCH are associated with different coresetPoolIndex values, the second PDCCH can end later than the first symbol; and when the second PDCCH and the first PDCCH are not associated with different coresetPoolIndex values, the second PDCCH cannot end later than the first symbol.

As one embodiment, the statement "the second PDCCH can end later than the first symbol" means: it is allowed that the second PDCCH ends later than the first symbol.

As one embodiment, the second PDCCH ends at a second symbol in a time domain; and the statement "the second PDCCH can end later than the first symbol" means: candidates of the second symbol comprise at least one symbol later than the first symbol.

As one embodiment, the statement "the second PDCCH can end later than the first symbol" means: it is allowed that the second PDCCH ends later or not later than the first symbol.

As one embodiment, the statement "the second PDCCH can end later than the first symbol" means: there is no restriction on an ending position of the second PDCCH by the first symbol in a time domain.

As one embodiment, the statement "the second PDCCH cannot end later than the first symbol" means: it is not expected that the second PDCCH ends later than the first symbol.

As one embodiment, the second PDCCH ends at a second symbol in a time domain; and the statement "the second PDCCH cannot end later than the first symbol" means: candidates of the second symbol do not comprise a symbol later than the first symbol.

As one embodiment, the statement "the second PDCCH cannot end later than the first symbol" means: the end of the second PDCCH is no later than the first symbol.

As one embodiment, the statement "the second PDCCH cannot end later than the first symbol" means: it is not stipulated for the case where the second PDCCH ends later than the first symbol.

As one embodiment, the statement "the second PDCCH cannot end later than the first symbol" means: it is not allowed that the second PDCCH ends later than the first symbol.

As one embodiment, the statement "the second PDCCH and the first PDCCH are associated with different coresetPoolIndex values" means: the second PDCCH and the first PDCCH are associated with different control resource sets (CORESETs) with different coresetPoollndex values, or the DCI detected in the second PDCCH and the DCI detected in the first PDCCH are associated with different control resource sets with different coresetPoolIndex values.

As one embodiment, the statement "the second PDCCH and the first PDCCH are associated with different coresetPoolIndex values" means: the second PDCCH and the first PDCCH are associated with different ControlResourceSets, and the different ControlResourceSets have different coresetPoolIndex values.

As one embodiment, the statement "the second PDCCH and the first PDCCH are associated with different coresetPoolIndex values" means: the second PDCCH and the first PDCCH respectively occupy resources configured in 2 different ControlResourceSets, and the 2 different ControlResourceSets have different coresetPoolIndex values.

As one embodiment, the statement "the second PDCCH and the first PDCCH are associated with different coresetPoolIndex values" means: 2 different ControlResourceSets are respectively configured to be used for searching the DCI detected in the second PDCCH and the DCI detected in the first PDCCH, and the 2 different ControlResourceSets have different coresetPoolIndex values.

As one embodiment, when the second PDCCH and the first PDCCH are associated with the same coresetPoolIndex value, the second PDCCH and the first PDCCH are not associated with different coresetPoolIndex values.

As one embodiment, the statement "the second PDCCH and the first PDCCH are associated with the same coresetPoolIndex value" means: the second PDCCH and the first PDCCH are associated with different control resource sets (CORESETs) with the same coresetPoollndex value or are associated with the same control resource set, or the DCI detected in the second PDCCH and the DCI detected in the first PDCCH are associated with different control resource sets with the same coresetPoolIndex value or are associated with the same control resource set.

As one embodiment, the statement "the second PDCCH and the first PDCCH are associated with the same coresetPoolIndex value" means: the second PDCCH and the first PDCCH are associated with different ControlResourceSets, and the different ControlResourceSets have the same coresetPoolIndex value, or the second PDCCH and the first PDCCH are associated with the same control resource set.

As one embodiment, the statement "the second PDCCH and the first PDCCH are associated with the same coresetPoolIndex value" means: the second PDCCH and the first PDCCH respectively occupy resources configured in 2 different ControlResourceSets, and the 2 different ControlResourceSets have the same coresetPoolIndex value, or the second PDCCH and the first PDCCH occupy resources configured in the same ControlResourceSet.

As one embodiment, the statement "the second PDCCH and the first PDCCH are associated with the same coresetPoolIndex value" means: 2 different ControlResourceSets are respectively configured to be used for searching the DCI detected in the second PDCCH and the DCI detected in the first PDCCH, and the 2 different ControlResourceSets have the same coresetPoolIndex value, or the same ControlResourceSet is configured to be used for searching the DCI detected in the second PDCCH and the DCI detected in the first PDCCH.

As one embodiment, when the first node is not configured with different coresetPoolIndex values, the second PDCCH and the first PDCCH are not associated with different coresetPoolIndex values.

### Embodiment 8

Embodiment 8 illustrates a structural block diagram of a processing device in one first node device, as shown in FIG. 8. In FIG. 8, a processing device 800 of the first node device comprises a first receiver 801 and a first transmitter 802.

As one embodiment, the first node device 800 is a base station.

As one embodiment, the first node device 800 is user equipment.

As one embodiment, the first node device 800 is a relay node.

As one embodiment, the first node device 800 is a vehicle-mounted communication device.

As one embodiment, the first node device 800 is user equipment with a single panel.

As one embodiment, the first node device 800 is user equipment with a plurality of panels.

As one embodiment, the first receiver 801 comprises at least one of the antenna 452, the receiving device 454, the multi-antenna receiving processor 458, the receiving processor 456, the controller/processor 459, the memory 460, and the data source 467 in FIG. 4 of the present application.

As one embodiment, the first receiver 801 comprises at least the first five of the antenna 452, the receiving device 454, the multi-antenna receiving processor 458, the receiving processor 456, the controller/processor 459, the memory 460, and the data source 467 in FIG. 4 of the present application.

As one embodiment, the first receiver 801 comprises at least the first four of the antenna 452, the receiving device 454, the multi-antenna receiving processor 458, the receiving processor 456, the controller/processor 459, the memory 460, and the data source 467 in FIG. 4 of the present application.

As one embodiment, the first receiver 801 comprises at least the first three of the antenna 452, the receiving device 454, the multi-antenna receiving processor 458, the receiving processor 456, the controller/processor 459, the memory 460, and the data source 467 in FIG. 4 of the present application.

As one embodiment, the first receiver 801 comprises at least the first two of the antenna 452, the receiving device 454, the multi-antenna receiving processor 458, the receiving processor 456, the controller/processor 459, the memory 460, and the data source 467 in FIG. 4 of the present application.

As one embodiment, the first transmitter 802 comprises at least one of the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 802 comprises at least the first five of the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 802 comprises at least the first four of the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 802 comprises at least the first three of the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 802 comprises at least the first two of the antenna 452, the transmitting device 454, the multi-antenna transmitting processor 457, the transmitting processor 468, the controller/processor 459, the memory 460, and the data source 467 in FIG. 4 of the present application.

As one embodiment, the first receiver 801 receives a first PDCCH and a second PDCCH; and the first transmitter 802 sends a first PUSCH and a second PUSCH, the first PDCCH and the second PDCCH respectively scheduling the first PUSCH and the second PUSCH, wherein the first PDCCH ends at a first symbol, and the second PUSCH starts earlier than the end of the first PUSCH; and whether the second PDCCH can end later than the first symbol is related to whether the second PUSCH overlaps with the first PUSCH.

As one embodiment, when the second PUSCH overlaps with the first PUSCH, the second PDCCH can end later than the first symbol.

As one embodiment, when the second PUSCH does not overlap with the first PUSCH: when the second PDCCH and the first PDCCH are associated with different coresetPoollndex values, the second PDCCH can end later than the first symbol.

As one embodiment, when the second PUSCH does not overlap the first PUSCH, whether the second PDCCH can end later than the first symbol is related to whether the first PDCCH and the second PDCCH are associated with different coresetPoolIndex values.

As one embodiment, when the second PUSCH does not overlap with the first PUSCH: when the second PDCCH and the first PDCCH are not associated with different coresetPoolIndex values, the second PDCCH cannot end later than the first symbol.

As one embodiment, the first PDCCH and the second PDCCH are on the same BWP, and the first PUSCH and the second PUSCH are on the same scheduled cell.

As one embodiment, ackNackFeedbackMode is configured as separate.

### Embodiment 9

9 illustrates a structural block diagram of a processing device in one second node device, as shown in FIG. 9. In FIG. 9, the processing device 900 of the second node device comprises a second transmitter 901 and a second receiver 902.

As one embodiment, the second node device 900 is user equipment.

As one embodiment, the second node device 900 is a base station.

As one embodiment, the second node device 900 is a satellite equipment.

As one embodiment, the second node device 900 is a relay node.

As one embodiment, the second node device 900 is a vehicle-mounted communication device.

As one embodiment, the second node device 900 is user equipment supporting V2X communication.

As one embodiment, the second node device 900 is equipment supporting operations on a high frequency spectrum.

As one embodiment, the second node device 900 is equipment supporting operations on a shared spectrum.

As one embodiment, the second node device 900 is a device supporting XR services.

As one embodiment, the second node device 900 is one of a test device, test equipment, and a test instrumentation.

As one embodiment, the second transmitter 901 comprises at least one of the antenna 420, the transmitting device 418, the multi-antenna transmitting processor 471, the transmitting processor 416, the controller/processor 475, and the memory 476 in FIG. 4 of the present application.

As one embodiment, the second transmitter 901 comprises at least the first five of the antenna 420, the transmitting device 418, the multi-antenna transmitting processor 471, the transmitting processor 416, the controller/processor 475, and the memory 476 in FIG. 4 of the present application.

As one embodiment, the second transmitter 901 comprises at least the first four of the antenna 420, the transmitting device 418, the multi-antenna transmitting processor 471, the transmitting processor 416, the controller/processor 475, and the memory 476 in FIG. 4 of the present application.

As one embodiment, the second transmitter 901 comprises at least the first three of the antenna 420, the transmitting device 418, the multi-antenna transmitting processor 471, the transmitting processor 416, the controller/processor 475, and the memory 476 in FIG. 4 of the present application.

As one embodiment, the second transmitter 901 comprises at least the first two of the antenna 420, the transmitting device 418, the multi-antenna transmitting processor 471, the transmitting processor 416, the controller/processor 475, and the memory 476 in FIG. 4 of the present application.

As one embodiment, the second receiver 902 comprises at least one of antenna 420, the receiving device 418, the multi-antenna receiving processor 472, the receiving processor 470, the controller/processor 475, and the memory 476 in FIG. 4 of the present application.

As one embodiment, the second receiver 902 comprises at least the first five of the antenna 420, the receiving device 418, the multi-antenna receiving processor 472, the receiving processor 470, the controller/processor 475, and the memory 476 in FIG. 4 of the present application.

As one embodiment, the second receiver 902 comprises at least the first four of the antenna 420, the receiving device 418, the multi-antenna receiving processor 472, the receiving processor 470, the controller/processor 475, and the memory 476 in FIG. 4 of the present application.

As one embodiment, the second receiver 902 comprises at least the first three of the antenna 420, the receiving device 418, the multi-antenna receiving processor 472, the receiving processor 470, the controller/processor 475, and the memory 476 in FIG. 4 of the present application.

As one embodiment, the second receiver 902 comprises at least the first two of the antenna 420, the receiving device 418, the multi-antenna receiving processor 472, the receiving processor 470, the controller/processor 475, and the memory 476 in FIG. 4 of the present application.

As one embodiment, the second transmitter 901 sends a first PDCCH and a second PDCCH; and the second receiver 902 receives a first PUSCH and a second PUSCH, the first PDCCH and the second PDCCH respectively scheduling the first PUSCH and the second PUSCH, wherein the first PDCCH ends at a first symbol, and the second PUSCH starts earlier than the end of the first PUSCH; and whether the second PDCCH can end later than the first symbol is related to whether the second PUSCH overlaps with the first PUSCH.

As one embodiment, when the second PUSCH overlaps with the first PUSCH, the second PDCCH can end later than the first symbol.

As one embodiment, when the second PUSCH does not overlap with the first PUSCH: when the second PDCCH and the first PDCCH are associated with different coresetPoolIndex values, the second PDCCH can end later than the first symbol.

As one embodiment, when the second PUSCH does not overlap the first PUSCH, whether the second PDCCH can end later than the first symbol is related to whether the first PDCCH and the second PDCCH are associated with different coresetPoolIndex values.

As one embodiment, when the second PUSCH does not overlap with the first PUSCH: when the second PDCCH and the first PDCCH are not associated with different coresetPoolIndex values, the second PDCCH cannot end later than the first symbol.

As one embodiment, the first PDCCH and the second PDCCH are on the same BWP, and the first PUSCH and the second PUSCH are on the same scheduled cell.

As one embodiment, ackNackFeedbackMode is configured as separate.

Those skilled in the art can understand that all or part of the steps in the above method can be completed by instructing the relevant hardware through a program, and the program can be stored in a computer-readable storage medium, such as a read-only memory, a hard disk or an optical disk. Optionally, all or part of the steps in the above embodiments can also be implemented using one or more integrated circuits. Correspondingly, each module unit in the above embodiments can be implemented in the form of hardware or in the form of a software function module. The present application is not limited to any specific form of combination of software and hardware. A first node device in the present application includes but is not limited to mobile phones, tablet computers, laptops, Internet cards, low-power-consumption equipment, eMTC equipment, NB-IoT equipment, vehicle-mounted communication devices, aircrafts, airplanes, drones, remote-controlled airplanes, and other wireless communication devices. A second node device in the present application includes but is not limited to mobile phones, tablet computers, laptops, Internet cards, low-power-consumption equipment, eMTC equipment, NB-IoT equipment, vehicle-mounted communication devices, aircrafts, airplanes, drones, remote-controlled airplanes, and other wireless communication devices. The user equipment or UE or terminal in the present application includes but is not limited to mobile phones, tablet computers, laptops, Internet cards, low-power-consumption equipment, eMTC equipment, NB-IoT equipment, vehicle-mounted communication devices, aircrafts, airplanes, drones, remote-controlled airplanes, and other wireless communication devices. The base station equipment or base station or network-side equipment in the present application includes but is not limited to macro cellular base stations, micro cellular base stations, Femtocells, relay base stations, eNBs, gNBs, transmit receive points (TRP), GNSS, relay satellites, satellite base stations, aerial base stations, test devices, test equipment, and other equipment.

Those skilled in the art should understand that the present invention can be implemented in other specified forms without departing from its core or basic features. Therefore, the embodiments disclosed at present should be regarded as descriptive rather than restrictive in any way. The scope of the invention is determined by the attached claims rather than the previous description, and all changes within the equivalent meaning and area are considered to be included therein.

## Claims

1. A first node used for wireless communication, comprising:
a first receiver for receiving a first PDCCH and a second PDCCH; and
a first transmitter for sending a first PUSCH and a second PUSCH, the first PDCCH and the second PDCCH respectively scheduling the first PUSCH and the second PUSCH,
wherein the first PDCCH ends at a first symbol, and the second PUSCH starts earlier than the end of the first PUSCH; and whether the second PDCCH can end later than the first symbol is related to whether the second PUSCH overlaps with the first PUSCH.

2. The first node according to claim 1, wherein when the second PUSCH overlaps with the first PUSCH, the second PDCCH can end later than the first symbol.

3. The first node according to claim 1 or 2, wherein when the second PUSCH overlaps with the first PUSCH in a time domain, the second PDCCH and the first PDCCH are associated with different coresetPoolIndex values.

4. The first node according to any one of claims 1 to 3, wherein when the second PUSCH does not overlap with the first PUSCH, whether the second PDCCH can end later than the first symbol is related to whether the first PDCCH and the second PDCCH are associated with different coresetPoolIndex values.

5. The first node according to any one of claims 1 to 4, wherein when the second PUSCH does not overlap with the first PUSCH: when the second PDCCH and the first PDCCH are associated with different coresetPoolIndex values, the second PDCCH can end later than the first symbol.

6. The first node according to any one of claims 1 to 5, wherein when the second PUSCH does not overlap with the first PUSCH: when the second PDCCH and the first PDCCH are not associated to different coresetPoolIndex values, the second PDCCH cannot end later than the first symbol.

7. The first node according to claim 6, wherein when the second PDCCH and the first PDCCH are associated with the same coresetPoolIndex value, the second PDCCH and the first PDCCH are not associated with different coresetPoolIndex values.

8. The first node according to any one of claims 1 to 7, wherein the first PUSCH and the second PUSCH are on the same scheduled cell.

9. The first node according to any one of claims 1 to 8, wherein both of the first PUSCH and the second PUSCH are for two HARQ process IDs respectively; and the first node is configured with a higher layer parameter PDCCH-Config for an active BWP (Bandwidth Part) of one serving cell, and the higher layer parameter PDCCH-Config comprises 2 different coresetPoolIndex values in a ControlResourceSet.

10. The first node according to any one of claims 1 to 9, wherein the meaning that the second PUSCH overlaps/does not overlap with the first PUSCH is: the second PUSCH overlaps/does not overlap with the first PUSCH in a time domain.

11. A second node used for wireless communication, comprising:
a second transmitter for sending a first PDCCH and a second PDCCH; and
a second receiver for receiving a first PUSCH and a second PUSCH, the first PDCCH and the second PDCCH respectively scheduling the first PUSCH and the second PUSCH,
wherein the first PDCCH ends at a first symbol, and the second PUSCH starts earlier than the end of the first PUSCH; and whether the second PDCCH can end later than the first symbol is related to whether the second PUSCH overlaps with the first PUSCH.

12. The second node according to claim 11, wherein when the second PUSCH overlaps with the first PUSCH, the second PDCCH can end later than the first symbol.

13. The second node according to claim 11 or 12, wherein when the second PUSCH overlaps with the first PUSCH in a time domain, the second PDCCH and the first PDCCH are associated with different coresetPoolIndex values.

14. The second node according to any one of claims 11 to 13, wherein when the second PUSCH does not overlap with the first PUSCH, whether the second PDCCH can end later than the first symbol is related to whether the first PDCCH and the second PDCCH are associated with different coresetPoolIndex values.

15. The second node according to any one of claims 11 to 14, wherein when the second PUSCH does not overlap with the first PUSCH: when the second PDCCH and the first PDCCH are associated with different coresetPoolIndex values, the second PDCCH can end later than the first symbol.

16. The second node according to any one of claims 11 to 15, wherein when the second PUSCH does not overlap with the first PUSCH: when the second PDCCH and the first PDCCH are not associated with different coresetPoolIndex values, the second PDCCH cannot end later than the first symbol.

17. The second node according to claim 16, wherein when the second PDCCH and the first PDCCH are associated with the same coresetPoolIndex value, the second PDCCH and the first PDCCH are not associated with different coresetPoolIndex values.

18. The second node according to any one of claims 11 to 17, wherein the first PUSCH and the second PUSCH are on the same scheduled cell.

19. The second node according to any one of claims 11 to 18, wherein both of the first PUSCH and the second PUSCH are for two HARQ process IDs respectively.

20. The second node according to any one of claims 11 to 19, wherein the meaning that the second PUSCH overlaps/does not overlap with the first PUSCH is: the second PUSCH overlaps/does not overlap with the first PUSCH in a time domain.

21. A method used in a first node for wireless communication, comprising:
receiving a first PDCCH and a second PDCCH; and
sending a first PUSCH and a second PUSCH, the first PDCCH and the second PDCCH respectively scheduling the first PUSCH and the second PUSCH,
wherein the first PDCCH ends at a first symbol, and the second PUSCH starts earlier than the end of the first PUSCH; and whether the second PDCCH can end later than the first symbol is related to whether the second PUSCH overlaps with the first PUSCH.

22. The method in the first node according to claim 21, wherein when the second PUSCH overlaps with the first PUSCH, the second PDCCH can end later than the first symbol.

23. The method in the first node according to claim 21 or 22, wherein when the second PUSCH overlaps with the first PUSCH in a time domain, the second PDCCH and the first PDCCH are associated with different coresetPoolIndex values.

24. The method in the first node according to any one of claims 21 to 23, wherein when the second PUSCH does not overlap with the first PUSCH, whether the second PDCCH can end later than the first symbol is related to whether the first PDCCH and the second PDCCH are associated with different coresetPoolIndex values.

25. The method in the first node according to any one of claims 21 to 24, wherein when the second PUSCH does not overlap with the first PUSCH: when the second PDCCH and the first PDCCH are associated with different coresetPoolIndex values, the second PDCCH can end later than the first symbol.

26. The method in the first node according to any one of claims 21 to 25, wherein when the second PUSCH does not overlap with the first PUSCH: when the second PDCCH and the first PDCCH are not associated with different coresetPoolIndex values, the second PDCCH cannot end later than the first symbol.

27. The method in the first node according to claim 26, wherein when the second PDCCH and the first PDCCH are associated with the same coresetPoolIndex value, the second PDCCH and the first PDCCH are not associated to different coresetPoolIndex values.

28. The method in the first node according to any one of claims 21 to 27, wherein the first PUSCH and the second PUSCH are on the same scheduled cell.

29. The method in the first node according to any one of claims 21 to 28, wherein both of the first PUSCH and the second PUSCH are for two HARQ process IDs respectively; and the first node is configured with a higher layer parameter PDCCH-Config for an active BWP (Bandwidth part) of one serving cell, and the higher layer parameter PDCCH-Config comprises 2 different coresetPoolIndex values in a ControlResourceSet.

30. The method in the first node according to any one of claims 21 to 29, wherein the meaning that the second PUSCH overlaps/does not overlap with the first PUSCH is: the second PUSCH overlaps/does not overlap with the first PUSCH in a time domain.

31. A method used in a second node for wireless communication, comprising:
sending a first PDCCH and a second PDCCH; and
receiving a first PUSCH and a second PUSCH, the first PDCCH and the second PDCCH respectively scheduling the first PUSCH and the second PUSCH,
wherein the first PDCCH ends at a first symbol, and the second PUSCH starts earlier than the end of the first PUSCH; and whether the second PDCCH can end later than the first symbol is related to whether the second PUSCH overlaps with the first PUSCH.

32. The method in the second node according to claim 31, wherein when the second PUSCH overlaps with the first PUSCH, the second PDCCH can end later than the first symbol.

33. The method in the second node according to claim 31 or 32, wherein when the second PUSCH overlaps with the first PUSCH in a time domain, the second PDCCH and the first PDCCH are associated with different coresetPoolIndex values.

34. The method in the second node according to any one of claims 31 to 33, wherein when the second PUSCH does not overlap with the first PUSCH, whether the second PDCCH can end later than the first symbol is related to whether the first PDCCH and the second PDCCH are associated with different coresetPoollndex values.

35. The method in the second node according to any one of claims 31 to 34, wherein when the second PUSCH does not overlap with the first PUSCH: when the second PDCCH and the first PDCCH are associated with different coresetPoollndex values, the second PDCCH can end later than the first symbol.

36. The method in the second node according to any one of claims 31 to 35, wherein when the second PUSCH does not overlap with the first PUSCH: when the second PDCCH and the first PDCCH are not associated with different coresetPoolIndex values, the second PDCCH cannot end later than the first symbol.

37. The method in the second node according to claim 36, wherein when the second PDCCH and the first PDCCH are associated with the same coresetPoolIndex value, the second PDCCH and the first PDCCH are not associated with different coresetPoolIndex values.

38. The method in the second node according to any one of claims 31 to 37, wherein the first PUSCH and the second PUSCH are on the same scheduled cell.

39. The method in the second node according to any one of claims 31 to 38, wherein both of the first PUSCH and the second PUSCH are for two HARQ process IDs respectively.

40. The method in the second node according to any one of claims 31 to 39, wherein the meaning that the second PUSCH overlaps/does not overlap with the first PUSCH is: the second PUSCH overlaps/does not overlap with the first PUSCH in a time domain.
